# FASCICULE DE BREVET EUROPEEN

(11) **EP 3 141 809 B1**
(45) Date de publication et mention de la délivrance du brevet: **30.01.2019**
(21) Numéro de dépôt: 16186668.6
(22) Date de dépôt: 31.08.2016
(51) Int. Cl.: F21V 14/02, F21S 43/145, F21Y 115/15, F21Y 105/00, F21Y 115/10, F21S 43/235

(54) **DISPOSITIF LUMINEUX À DIODE ÉLECTROLUMINESCENTE ORGANIQUE**
LEUCHTVORRICHTUNG MIT ORGANISCHER ELEKTROLUMINESZENZDIODE
LIGHTING DEVICE WITH ORGANIC LIGHT EMITTING DIODE

(30) Priorité: 08.09.2015 FR 1558329
(43) Date de publication de la demande: 15.03.2017
(73) Titulaire: VALEO VISION, 93012 Bobigny Cedex (FR)
(72) Inventeur: PATRIZI, Stéphane, 49460 Montreuil Juigné (FR); RUAT, Olivier, 49800 Trelaze (FR)

(56) Documents cités:
- KR-B1- 101 157 645
- US-A1- 2005 099 810
- US-A1- 2006 133 104
- US-A1- 2015 060 779

## Description

L'invention est relative au domaine des dispositifs d'éclairage pour véhicule automobile. Un dispositif lumineux et un procédé d'utilisation d'un tel dispositif selon le préambule des revendications 1 et 11 sont connus de US 2006/1331404 A1. De manière connue, ce type de dispositif tend à se complexifier du fait du nombre croissant de fonctions que ces dispositifs ont vocation à mettre en oeuvre. Parmi ces fonctions, on recense notamment la mise en oeuvre de séquences d'allumage, par exemple lors de la mise en marche du véhicule, qui présentent un caractère esthétique particulier. Ce caractère esthétique contribue notamment à définir l'apparence générale, ou la « signature visuelle », du véhicule considéré, et qui le différencie d'autres véhicules.
Dans ce contexte, l'invention vise à présenter un dispositif lumineux pour véhicule automobile qui permette la définition d'une signature visuelle particulière pour ce véhicule tout en présentant une conception, une fiabilité et une compacité optimisées.
A cet effet, l'invention concerne un dispositif lumineux pour véhicule automobile, le dispositif lumineux étant adapté pour émettre de la lumière selon une direction d'émission principale et comprenant au moins :
- une palette montée mobile dans le dispositif lumineux entre une position de repos et une position d'émission, la palette présentant un panneau sur lequel est agencée au moins une source surfacique de lumière.
Par « source surfacique de lumière », on entend une source présentant une surface d'émission de lumière et dont l'épaisseur est négligeable devant les dimensions de cette surface d'émission de lumière.

Selon l'invention, la ou au moins une source surfacique de lumière est une diode électroluminescente organique couvrant tout ou partie de la surface du panneau de la palette correspondante.
Le cas échéant, l'aire de la surface émettrice de lumière de l'OLED peut être supérieure à 1 cm².
En variante, la source de lumière surfacique peut être un panneau lumineux formé par un assemblage de fibres optiques, notamment juxtaposées, tressées ou entremêlées, les fibres optiques étant associées à une ou plusieurs sources lumineuses, notamment comportant une ou plusieurs diodes électroluminescentes LED. Le cas échéant, la ou les sources lumineuses peuvent être agencées pour émettre de la lumière dans les extrémités des fibres optiques, les fibres optiques étant agencées pour diffuser cette lumière via des faces de sorties de ces fibres formées sur leur enveloppe sur toute ou partie de leur longueur, l'ensemble desdites faces de sorties formant ainsi la source de lumière surfacique, également appelée dans ce cas FOLED.

Selon un aspect de l'invention, le dispositif comprend en outre au moins une embase montée fixe dans le dispositif lumineux, la palette étant montée mobile sur l'embase, et le dispositif lumineux comprend en outre un dispositif d'actionnement adapté pour provoquer un déplacement de la palette par rapport à l'embase entre une position de repos et une position d'émission.
Par exemple, l'embase est fixée à un boîtier du dispositif lumineux qui délimite une cavité dans laquelle les composants du dispositif sont agencés.
Selon un aspect de l'invention, la palette est articulée sur l'embase, la source de lumière surfacique étant apte à émettre de la lumière selon une direction de rayonnement privilégiée, et le dispositif d'actionnement est adapté pour faire pivoter la palette par rapport à l'embase entre ladite position de repos et ladite position d'émission dans laquelle la direction de rayonnement privilégiée de la source de lumière surfacique est voisine de la direction d'émission principale ou correspond sensiblement à la direction d'émission principale du dispositif lumineux.
Dans un exemple de réalisation, la palette est articulée sur l'embase de sorte à pivoter autour d'un axe horizontal. Cet axe horizontal est par exemple orthogonal à la direction d'émission principale du dispositif lumineux.
Selon un aspect de l'invention, dans la position d'émission, l'écart angulaire entre la direction d'émission principale et la direction de rayonnement privilégiée de la palette est inférieur à 50°, voir inférieur à 15°.

Selon l'invention, dans la position de repos, la source de lumière de la ou chaque palette est visible dans la direction d'émission.
Selon un aspect de l'invention, l'écart angulaire entre la position de repos et la position d'émission de ladite palette est supérieur à 40°.
Selon un aspect de l'invention, le dispositif comprend au moins deux palettes présentant chacune un panneau sur lequel est agencée au moins une source de lumière surfacique, à chaque embase étant associées deux palettes montées mobiles sur ladite embase et agencées sur l'embase symétriquement l'une par rapport l'autre par rapport à la direction d'émission principale.
Avantageusement, le dispositif d'actionnement est agencé pour provoquer un déplacement simultané des deux palettes associées.
Selon un aspect de l'invention, le dispositif d'actionnement comprend un actionneur et une pièce mobile sur laquelle la ou chaque palette associée à l'embase considérée est articulée, l'actionneur étant adapté pour déplacer la pièce mobile par rapport à l'embase de façon à faire pivoter simultanément chaque palette associée à l'embase considérée par rapport à ladite embase entre la position de repos et la position d'émission.

Selon un aspect de l'invention, chaque embase comprend au moins une gorge de guidage dans laquelle la pièce mobile du dispositif d'actionnement correspondant est déplaçable.

La gorge de guidage est montée fixe dans le dispositif lumineux.

Selon un aspect de l'invention, le déplacement de la pièce mobile par lequel la palette est pivotée par rapport à l'embase est un mouvement de translation.

Selon un aspect de l'invention, chaque palette comprend un bras de connexion dont une première extrémité est fixée au panneau correspondant, et dont une deuxième extrémité est d'une part fixée à l'embase correspondante par l'intermédiaire d'un premier axe, et d'autre part fixée à la pièce mobile associée par l'intermédiaire d'un deuxième axe.

Par exemple, la deuxième extrémité est fixée aux parois de la gorge de guidage.

Selon un aspect de l'invention, la deuxième extrémité du bras de connexion comprend un orifice pour la réception du deuxième axe, ledit orifice présentant une forme générale cylindrique de section oblongue

Selon un aspect de l'invention, l'actionneur comprend un moteur, une bielle connectée au moteur et un vérin de connexion connectant la bielle à la pièce mobile.

Toutefois, en variante, l'actionneur comprend un fil à mémoire de forme associé à un ressort.

Selon un aspect de l'invention, le dispositif comprend au moins deux embases fixes par rapport au boîtier, et le dispositif comprend en outre un bâti fixe par rapport au boîtier et sur lequel la ou chaque embase est agencée, les embases étant espacées les unes des autres le long du bâti.

Avantageusement, le dispositif comprend au moins une palette montée mobile sur chaque embase et sur laquelle est agencée au moins une source surfacique de lumière.

Selon un aspect de l'invention, le dispositif comprend en outre une unité de commande adaptée pour provoquer le déplacement de chaque palette selon une séquence d'actionnement au cours de laquelle les palettes associées à des embases différentes sont déplacées entre leurs positions de repos et d'émission séquentiellement d'une embase à l'autre selon un sens de parcours donné du bâti.

Avantageusement, l'unité de commande est également adaptée pour commander l'allumage des sources surfaciques de lumière.

Par exemple, l'unité de commande est configurée pour allumer chaque source de lumière surfacique conjointement avec le déplacement de la palette sur laquelle elle est agencée. En variante, l'unité de commande peut être agencée pour allumer toutes les sources de lumière surfaciques préalablement aux déplacements des palettes. Selon un exemple, l'ensemble des sources surfaciques de lumière peut être agencé pour réaliser une fonction d'indicateur de direction défilant.

Selon un aspect de l'invention, le bâti délimite une cavité, et le dispositif lumineux comprend en outre un module d'éclairage comprenant au moins un guide de lumière de forme allongée s'étendant dans la cavité délimitée par le bâti.

L'invention concerne également un procédé d'utilisation d'un tel que défini ci-dessus, le procédé comprenant :
- l'allumage d'au moins la source de lumière, la source de lumière formant un film lumineux couvrant tout ou partie du panneau de la palette correspondante.

Selon un aspect de l'invention, le procédé comprend en outre le déplacement de la ou d'au moins une palette entre la position de repos et la position d'émission via le dispositif d'actionnement.

Selon un aspect de l'invention, le procédé comprend :
- l'allumage de toutes les sources de lumières du dispositif lumineux,
- le déplacement de chaque palette entre la position de repos et la position d'émission, les palettes associées à une embase donnée étant pivotées simultanément, les palettes respectivement associées à des embases différentes étant pivotées de manière décalée dans le temps selon un ordre prédéfini le long du bâti.

Selon un aspect de l'invention, les palettes associées à des embases différentes sont pivotées entre leurs positions de repos et d'émission séquentiellement d'une embase à l'autre selon un sens de parcours donné du bâti.

L'invention sera mieux comprise à la lecture de la description détaillée qui va suivre, donnée uniquement à titre d'exemple et faite en référence aux Figures annexées, sur lesquelles :
- La Figure 1 est une illustration schématique d'un dispositif lumineux selon l'invention ;
- Les Figures 2a et 2b sont des vue du dispositif lumineux de la Figure 1 ;
- La Figure 3 illustre une palette du dispositif lumineux ;
- La Figure 4 illustre une pièce mobile du dispositif de la Figure 1 ; et
- La Figure 5 est un diagramme-bloc d'un procédé d'utilisation du dispositif lumineux selon l'invention.

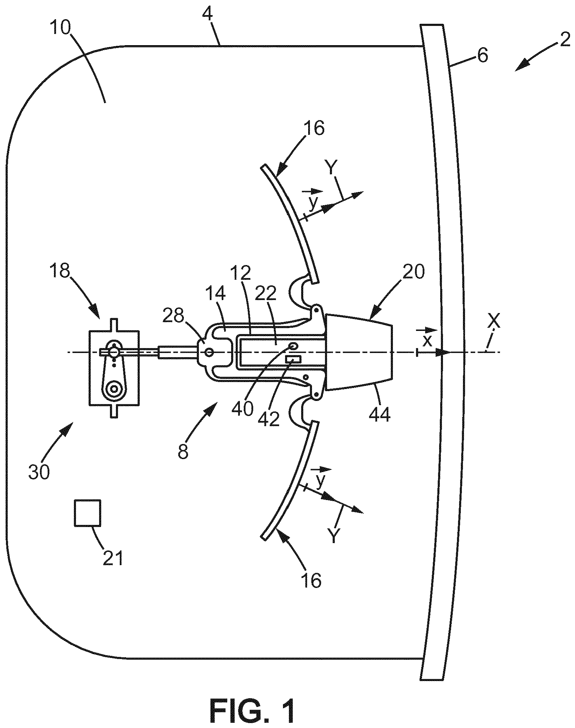

La Figure 1 illustre un dispositif lumineux selon l'invention.

La Figure 1 illustre un dispositif 2 selon l'invention. Le dispositif 2 est un dispositif lumineux d'éclairage ou de signalisation pour véhicule automobile. Par exemple, le dispositif 2 est un phare principal de véhicule, un feu de route, un feu de croisement, un clignotant ou un feu arrière.

Dans l'exemple de la Figure 1, le dispositif 2 est un feu arrière.

Le dispositif 2 est adapté pour émettre de la lumière selon une direction d'émission principale notée X.

Le dispositif 2 comprend un boîtier 4, une glace 6 et un module d'émission lumineuse 8, ci-après module 8.

Le boîtier 4 délimite intérieurement une cavité 10 dans laquelle le module 8 est agencé. La cavité 10 est obturée vers l'avant par la glace 6.

Le boîtier 4 et la glace 6 sont par exemple réalisés à partir de matériaux connus via un procédé de fabrication connu.

Le module 8 comprend un bâti 12, au moins une embase 14, au moins une palette 16 adaptée pour émettre de la lumière, et au moins un dispositif d'actionnement 18 configuré pour provoquer le déplacement de la palette 16. En outre, le module 8 comprend un module d'éclairage 20 et une unité de commande 21.

Le bâti 12 est fixé au boîtier 4. Le bâti 12 se présente sous la forme d'une pièce allongée ayant une section transverse ayant une forme générale de U. Il délimite ainsi intérieurement une cavité 22 à laquelle est rapporté le module d'éclairage 20, comme décrit ci-après. On note que la cavité 22 est, dans certaines réalisations, également utilisée pour le passage de la connectique du dispositif 2, en particulier de la connectique nécessaire à l'alimentation en énergie électrique des différents composants du dispositif 2.

Le bâti 12 s'étend sensiblement horizontalement entre les parois latérales du boîtier 4 auxquelles il est fixé. Il est agencé dans le boîtier 4 de sorte que la cavité soit ouverte vers l'avant du dispositif 2.

On note que dans certaines réalisations, le bâti 12 est incurvé, sa courbure étant orientée vers l'arrière du dispositif 2.

Le bâti 12 est par exemple réalisé à partir d'un masque du dispositif 2 permettant de cacher des parties non esthétiques, telles que des faisceaux de connexion, et dont une partie est agencée pour recevoir des embases.

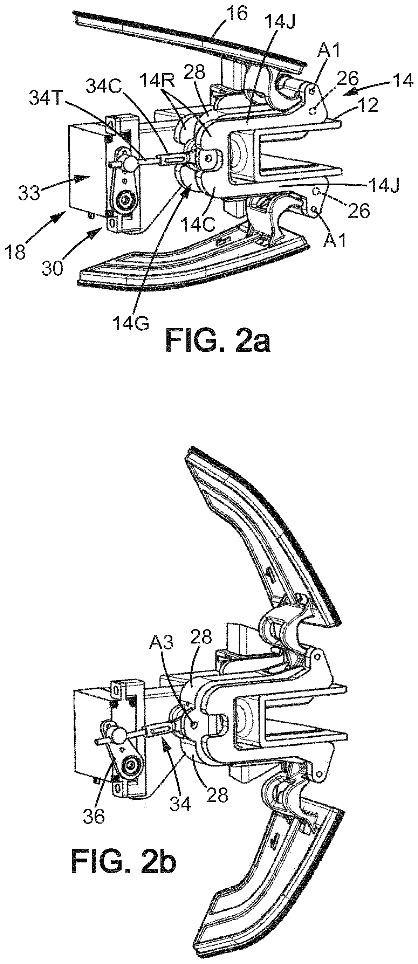

En référence aux Figures 1, 2a et 2b, le dispositif 2 comprend une pluralité d'embases 14 montées fixes dans le dispositif. Dans l'exemple des Figures, elles sont fixées au boîtier par l'intermédiaire du bâti 12, de sorte que les embases sont immobiles par rapport au boîtier du dispositif 2

Les embases 14 sont décalées les unes des autres le long du bâti 12. Par exemple, elles sont régulièrement espacées les unes des autres.

Dans l'exemple de la Figure 1, le dispositif 2 comprend cinq embases 14.

A chaque embase 14 est associée au moins une palette 16. Avantageusement, à chaque embase 14 sont associées au moins deux palettes 16 disposées symétriquement l'une par rapport à l'autre par rapport à la direction X. Avantageusement, le dispositif d'actionnement est alors agencé pour provoquer un déplacement simultané des deux palettes associées à une embase donnée.

Chaque embase 14 présente une forme générale de U. Autrement dit, chaque embase 14 présente deux jambes 14J et une portion centrale 14C joignant les deux jambes 14J. Les deux jambes sont sensiblement parallèles l'une à l'autre.

Les dimensions de la section en U de chaque embase 14 sont sensiblement complémentaires de celle de la section en U du bâti 12. Chaque embase 14 est emboîtée sur le bâti 12 et y est fixée.

En référence à la Figure 2a, chaque embase 14 comprend une gorge de guidage 14G pour le guidage d'une pièce mobile du dispositif d'actionnement 18.

Du fait du caractère fixe des embases 14 par rapport au dispositif 2, les gorges de guidages 14G sont fixes au sein du dispositif 2.

La gorge de guidage 14 est aménagée dans l'épaisseur de l'embase 14. Avantageusement, cette gorge de guidage 14G s'étend sur tout le pourtour de l'embase 14.

La gorge de guidage 14G se présente sous la forme d'un évidement de matière pratiqué sur une portion de l'épaisseur de l'embase 14. La gorge de guidage 14G forme ainsi un canal dans les flancs des jambes 14J et de la portion centrale 14C. Elle délimite en outre deux rebords 14R (Figure 2a) de l'embase 14R considérée.

En outre, l'extrémité libre de chaque jambe 14J de chaque embase 14 comprend des passages recevant un premier axe de rotation A1. Comme décrit ci-après, les palettes 16 associées à chaque embase 14 sont articulées sur l'embase 14 au moyen de cet axe A1.

Avantageusement, les rebords 14R de la portion centrale 14C sont pourvues d'un jour pour rendre accessible l'articulation de la pièce mobile évoquée ci-dessus au reste du dispositif d'actionnement 18. Les embases sont avantageusement réalisées avec un matériau offrant un coefficient de frottement faible pour minimiser l'effort de l'actionneur.

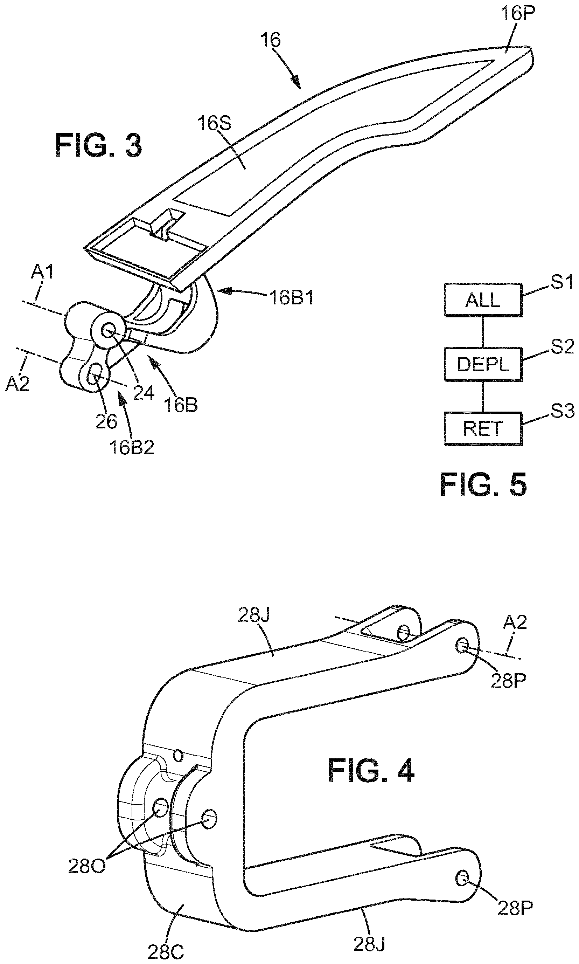

En référence aux Figures 2a, 2b et 3, chaque palette 16 est articulée sur l'embase 14 associée via un premier axe A1 décrit ci-dessus. En outre, chaque palette 16 est articulée sur la pièce mobile évoquée ci-dessus.

Chaque palette 16 présente un panneau 16P et un bras de connexion 16B.

Le panneau 16P se présente sous la forme d'un support présentant une surface donnée. Le panneau est par exemple sensiblement plan. Alternativement, le panneau 16P peut présenter une forme légèrement incurvée. Alternativement ou parallèlement, le panneau 16P peut présenter différentes portions formant un angle entre elles. Ces portions sont par exemple venues de matière entre elles, ou bien fixées les unes aux autres.

En outre, le panneau 16P présente une surface de forme quelconque. Dans l'exemple de la Figure 3, le panneau 16P présente une forme générale de L.

Chaque panneau 16P est adapté pour émettre de la lumière visible dans une direction de rayonnement privilégiée notée Y.

La direction Y correspond par exemple à une direction normale au panneau. Cette normale et par exemple la normale à la partie centrale du panneau lorsque celui-ci présente une courbure régulière. Dans d'autres réalisations dans lesquels le panneau 16P présente des portions formant des cassures entre elles, cette direction correspond par exemple à la normale à une portion du panneau choisie. Cette portion choisie est par exemple la portion qui forme l'écart angulaire le plus faible avec la direction X.

A cet effet, chaque panneau 16P comporte au moins une source de lumière 16S.

Dans le contexte de l'invention, la source de lumière 16S est une source surfacique de lumière. Comme indiqué ci-dessus, on entend par là une source de lumière présentant une surface d'émission de lumière et dont l'épaisseur est négligeable devant les dimensions de cette surface d'émission de lumière.

Avantageusement, la source de lumière 16S d'au moins un des panneaux 16P est un élément semiconducteur photo-émissif de type organique. Ce type d'élément photo-émissif est une diode électroluminescente organique connu sous l'acronyme anglophone OLED, pour « Organic Light-Emitting Diode ».

La source de lumière 16S forme un film photoémissif agencé sur le panneau 16P. La source de lumière 16S couvre tout ou partie de la surface du panneau 16P. Avantageusement, la source de lumière 16S couvre sensiblement l'intégralité de la surface du panneau 16P.

La source de lumière 16S est par exemple fixée sur le panneau 16P par collage.

La source de lumière 16S est par exemple adaptée pour émettre de la lumière de couleur rouge, ou encore orange.

Le bras de connexion 16B est prévu pour la connexion de la palette 16 à l'embase 14 associée ainsi qu'à la pièce mobile évoquée ci-dessus.

Le bras de connexion 16B présente ainsi une première extrémité 16B1 fixée au panneau 16P. Avantageusement, cette fixation est réalisée au niveau de l'arrière du panneau 16P.

Le bras de connexion 16 présente également une deuxième extrémité 16B2 pour l'articulation de la palette 16 sur l'embase 14 via un premier axe A1 décrit ci-dessus, et pour l'articulation de la palette sur la pièce mobile via un deuxième axe A2..

A cet effet, la deuxième extrémité 16B2 comprend un premier orifice 24 pour la réception de l'un des premiers axes A1 de l'embase 14 considérée. Le premier orifice 24 présente une forme générale cylindrique de section sensiblement circulaire.

Avantageusement, les premiers axes A1 sont disposés horizontalement (par rapport à l'orientation de la Figure). Dans l'exemple des Figures, les axes A1 sont ainsi orthogonaux à la direction d'émission X. Les palettes 16 sont donc adaptées pour pivoter autour d'un axe perpendiculaire à la direction principale d'émission X.

En outre, la deuxième extrémité 16B2 du bras de connexion 16 comprend un deuxième orifice 26 pour la réception du deuxième axe A2.

Avantageusement, le deuxième orifice 26 présente une forme générale cylindrique de section oblongue. Dans certaines réalisations, cette section oblongue est rectiligne. En variante, cette section oblongue est courbe.

La forme de la section de ce deuxième orifice 26 a pour effet de permettre la rotation de la palette 16 sous l'effet d'un mouvement de translation imprimé à la pièce mobile du dispositif d'actionnement 18.

Avantageusement, la deuxième extrémité 16B2 est fixée sur l'embase correspondante au niveau de la gorge de guidage 14G, et plus spécifiquement au niveau des rebords 14R qui la délimitent. Cette fixation est par exemple réalisée au niveau d'une zone que la pièce mobile ne peut atteindre lors de ses déplacements. Par exemple, celle-ci est réalisée au niveau de protubérances que présentent les rebords et qui s'étendent latéralement à l'écart de la jambe 14J correspondante au niveau de l'extrémité libre de cette jambe 14J (Figures 2a et 2b).

A nouveau en référence aux Figures 2a et 2b, le dispositif 2 comprend, pour chaque embase 14, un dispositif d'actionnement 18. Chaque dispositif d'actionnement 18 est configuré pour provoquer le déplacement de la ou les palettes 16 associées à l'embase 14 correspondante par rapport à cette embase 14 entre une position de repos illustrée sur la Figure 2a et une position d'émission illustrée sur la Figure 2b.

Dans la position d'émission, le panneau 16P des palettes 16 fait sensiblement face à la direction d'émission X. Le panneau 16P est alors observable dans la direction d'émission X sous un angle non rasant.

Dans la position de repos, le panneau 16P des palettes 16 ne fait pas face à la direction d'émission X. Par exemple, il est alors masqué par le bâti 12 et n'est pas visible. Alternativement, dans l'exemple des Figures, dans la position de repos, le panneau 16P des palettes est visible dans la direction X sous un angle faible voire rasant.

Autrement dit, dans la position d'émission, la direction de rayonnement privilégiée Y d'une palette 16 donnée est voisine de la direction X, ou correspond sensiblement à la direction X.

Au sens de la présente invention, par « voisine », on entend que l'écart angulaire en valeur absolue entre les directions X et Y est inférieur ou égal à 50°. Avantageusement, cet écart angulaire est inférieur à 15°.

L'écart angulaire est pris dans le plan de la Figure 1. Par exemple, cet écart angulaire est sensiblement égal à 25°. Cet écart angulaire correspond à l'angle d'élévation de la direction de rayonnement privilégiée Y de la palette par rapport à la direction d'émission principale X du dispositif 2, et correspond à l'angle orienté repéré par les vecteurs *̅x̅*̅ et *̅y̅*̅ sur la Figure 1.

Dans la position de repos, l'écart angulaire entre ces directions est supérieur ou égal à 70°. Il vaut par exemple 75°.

D'autres configurations angulaires sont possibles dans l'une et l'autre de ces positions.

De manière générale, avantageusement, l'écart angulaire entre les positions de repos et d'émission est supérieur ou égal à 40°, et préférentiellement à 50°. L'écart angulaire choisi est alors obtenu en sélectionnant notamment la forme et les dimensions de la section du deuxième orifice 26 du panneau 16 et la longueur de course de la pièce mobile.

Comme indiqué précédemment, le dispositif d'actionnement 18 est configuré pour provoquer le déplacement d'au moins une palette 16.

Plus spécifiquement, à chaque embase est associé un dispositif d'actionnement 18 adapté pour provoquer le déplacement des deux palettes associées à l'embase considérée. Avantageusement, le dispositif d'actionnement est alors configuré pour provoquer un déplacement simultané des deux palettes associées à l'embase considérée.

Chaque dispositif d'actionnement comprend une pièce mobile 28. En outre, il comprend un actionneur, ou mécanisme d'entraînement, 30.

En référence à la Figure 4, la pièce mobile 28 présente une forme générale de U. Elle comprend ainsi deux jambes 28J parallèles et une portion centrale 28C connectant les deux jambes 28J.

La pièce mobile 28 présente des dimensions, en particulier en termes d'espacement entre les deux jambes 28J, sensiblement complémentaires de celles de la gorge de guidage 14G de l'embase.

Chaque pièce mobile 28 est couplée à une embase donnée. Chaque pièce mobile est plus spécifiquement emboîtée sur l'embase correspondante de sorte que leurs formes de U respectives coïncident. Chaque pièce mobile 28 est en outre mobile dans la gorge de guidage 14G correspondante selon un mouvement de translation.

Selon ce mouvement de translation, les jambes 28J de la pièce mobile 28 glissent dans la gorge de guidage 14G le long des jambes 14J de l'embase 14 correspondante, comme illustré sur les Figures 2a et 2b. Lors de ce déplacement, la portion de connexion 28C de la pièce mobile se déplace en restant sensiblement parallèle à la portion de connexion 14C de l'embase 14.

L'extrémité libre de chaque jambe 28J comporte une lumière de passage 28P pour la réception du deuxième axe A2 (Figure 4) également reçu dans le deuxième orifice 26 des palettes 16 associées à l'embase 14 considérée.

La portion centrale 28C de la pièce mobile 28 comporte deux saillies comportant chacune un orifice de passage 280. Les orifices de passage 280 sont agencés en regard l'un de l'autre et sont prévus pour la réception d'un axe A3 (Figure 2b) permettant l'articulation de la pièce mobile sur le mécanisme d'entraînement 30.

Le mécanisme d'entraînement 30 en question comporte un moteur 33, un vérin de connexion 34 et une bielle 36.

Le moteur 33 est configuré pour entraîner la rotation de la bielle 36 lors de son fonctionnement.

Le vérin de connexion 34 lie cinématiquement la pièce mobile 28 au moteur 33 et à la bielle 36.

Il présente un cylindre 34C dans lequel est agencé un piston déplaçable (non représenté) portant une tige 34T dont l'extrémité libre est fixée à la bielle 36. Le cylindre du vérin est lui-même fixé à la pièce mobile 28 par l'intermédiaire de l'axe A3.

La bielle 36 est configurée pour actionner le vérin de connexion 34 et la pièce mobile 28 lors du fonctionnement du moteur.

En référence à la Figure 1, le module d'éclairage 20 est configuré pour réaliser une fonction d'éclairage spécifique du dispositif 2. Dans l'exemple des Figures, le module d'éclairage 20 est ainsi configuré pour réaliser la fonction d'éclairage de feu arrière.

A cet effet, le module d'éclairage 20 comprend au moins un guide de lumière 40. Dans l'exemple des Figures, le module d'éclairage 20 comprend deux guides de lumière 40 et 42. Les guides de lumière 40,42 présentent une forme générale allongée et s'étendent dans la cavité 22 délimitée par le bâti 12.

Le premier guide de lumière 40 présente par exemple une section circulaire.

Le deuxième guide de lumière 42 présente par exemple une section autre que circulaire.

Les deux guides 40, 42 sont couplés à l'une de leur extrémité à une source de lumière (non représentée) qui injecte dans la lumière dans le guide correspondant. Ces guides présentent par ailleurs des prismes se présentant sous la forme de reliefs ménagés dans leur surface, par exemple au niveau de leur partie arrière, et configurés pour dévier la lumière parcourant le guide correspondant dans la direction X.

Le module d'éclairage 20 comprend en outre une glace de fermeture 44 configurée pour conférer à la lumière émise par les guides de lumière 40, 42 une apparence particulière.

Par exemple, la glace de fermeture 44 présente des propriétés opalescentes.

L'unité de commande 21 est configuré pour commander les différents dispositifs d'actionnement 18 du dispositif 2. Dans le mode de réalisation des Figures, elle est en particulier configurée pour commander la mise en marche des moteurs 33 des dispositifs d'actionnement 18.

Avantageusement, elle est en outre configurée pour commander l'allumage et l'extinction des sources de lumière 16S portées par les différentes palettes 16.

Par exemple, l'unité de commande est configurée pour allumer chaque source de lumière 16S et, conjointement à l'allumage d'une source de lumière donnée, commander le déplacement de la palette sur laquelle elle est agencée.

En variante, l'unité de commande est configurée pour allumer toutes les sources de lumière préalablement aux déplacements des palettes.

Selon un exemple de réalisation, l'unité de commande est configurée pour mettre en oeuvre l'allumage et/ou l'extinction de l'ensemble des sources surfaciques de lumière pour réaliser une fonction d'indicateur de direction défilant.

L'unité de commande 21 comprend par exemple un microcontrôleur programmable.

On note que l'unité de commande 21 est par exemple située dans le dispositif 2. Alternativement, elle est située à l'extérieur du dispositif 2.

Avantageusement, l'unité de commande 21 est configurée pour faire pivoter chaque palette selon une séquence d'actionnement au cours de laquelle les palettes 16 associées à des embases différentes sont pivotées entre leurs positions de repos et d'émission séquentiellement d'une embase à l'autre selon un sens de parcours donné du bâti.

Le fonctionnement du dispositif 2 va maintenant être décrit en référence aux Figures.

Dans une configuration initiale, les sources de lumière 16S sont éteintes, de même que les guides de lumière 40, 42.

En outre, les palettes 16 se trouvent en position de repos.

Les étapes suivantes sont par exemple mise en oeuvre en réponse à la détection d'un événement particulier. Par exemple, elles sont mises en oeuvre à la suite de la mise en marche du véhicule sur lequel le dispositif 2 est monté. En ce sens, le procédé suivant forme un scénario d'accueil, ou « Welcome Scénario » en anglais.

Lors d'une étape initiale S1, l'unité de commande 21 commande l'allumage de tout ou partie des sources de lumière 16S. Les sources de lumière 16S forment alors des films lumineux couvrant tout ou partie du panneau 16P de la palette 16 correspondante.

Plus spécifiquement, l'allumage des sources de lumière 16S est mis en oeuvre par l'unité de commande 21 selon une séquence d'allumage prédéterminée, comme évoqué ci-dessus.

Dans un exemple de séquence, les sources de lumière 16S sont séquentiellement allumées les unes après les autres de proche en proche selon un sens de parcours donné du bâti 12.

Autrement dit, l'unité de commande 21 commande l'allumage des sources de lumière 16S associées aux deux palettes 16 portées par une embase 14 située à une extrémité du bâti 12. Puis, tout en maintenant ces sources de lumière allumées, les palettes de l'embase 14 voisine sont allumées, et ainsi de suite jusqu'à l'allumage de toutes les sources de lumière du dispositif 2.

On note que pour l'allumage des sources de lumière 16S, l'unité de commande 21 commande à une source d'énergie électrique (non représentée) l'alimentation des sources de lumière 16S.

Une fois toutes les sources de lumière 16S allumées, ou bien parallèlement à cette séquence d'allumage lors d'une étape S2, les palettes 16 sont pivotées selon une séquence prédéterminée.

Lors de cette séquence, les palettes 16 sont séquentiellement pivotées les unes après les autres de proche en proche selon un sens de parcours donné du bâti 12. Ce sens est par exemple le même que le sens observé lors de l'étape S1. Alternativement, il s'agit du sens inverse.

Autrement dit, l'unité de commande 21 commande au dispositif d'actionnement 18 associé à une embase 14 située à une extrémité du bâti 12 de faire passer les deux palettes 16 de cette embase 14 depuis la position de repos jusqu'à la position d'émission.

Ce passage est ensuite commandé au dispositif d'actionnement 18 de l'embase 14 voisine, et ainsi de suite jusqu'à ce que toutes les palettes soient passées en position d'émission.

On note que le pivotement des palettes 16 associées à une embase 14 peut être amorcé alors que les palettes 16 associés à l'embase précédente (au sens du sens de parcours du bâti qui est considéré) ne sont pas encore parvenues jusqu'à leur position d'émission.

Pour ce passage des palettes 16 d'une embase 14 donnée jusqu'à la position d'émission, l'unité de commande 21 commande la mise en marche du moteur 33 du dispositif d'actionnement 18 considéré. La bielle 36 associée est alors entraînée en mouvement. La tige 34T est alors déplacée de sorte que le piston associé vienne en fin de course dans le cylindre 34C correspondant et exerce une traction sur la pièce mobile 28 à laquelle il est fixé.

Cette traction se traduit par la translation de la pièce mobile 28 relativement à l'embase 14 associée selon un mouvement de translation parallèle à la direction des jambes 14J de l'embase 14 dans la gorge de guidage 14G.

Ce faisant, les parois des lumières de passage 28P en extrémité de jambe 28 tirent sur les deux axes A2 correspondant. Ces axes se déplacent dans l'orifice 26 correspondant des palettes 16 associées, ce qui provoque la rotation de ces palettes 16 autour de leur axe A1 et la rotation du panneau 16P de ces palettes depuis la position de repos jusqu'à la position d'émission.

Une fois la séquence de pivotement des palettes achevée, lors d'une étape S3, les palettes sont ramenées en position de repos et les sources de lumière 16S sont éteintes. A cet effet, l'unité de commande 21 commande aux dispositifs d'actionnement 18 la translation des pièces mobiles 28 en direction des embases 14. Pour une pièce mobile 28 donnée, cette translation provoque le déplacement du piston du vérin 34 associée jusqu'au fond du cylindre, puis le déplacement du cylindre en direction de l'embase, ce qui provoque la translation de la pièce mobile 28 dans la gorge de guidage 14G de l'embase correspondante. Les axes A2 portés par l'embase 14 sont déplacés dans l'orifice 26 puis sollicitent le bras 16B de la palette 16 de façon à faire pivoter les palettes vers leur position de repos.

Cette étape est optionnellement menée selon une séquence prédéterminée. Cette séquence comprend par exemple l'extinction séquentielle ou simultanée des sources de lumière 16S et le pivotement des palettes, ces actions étant menées dans un ordre choisi.

Parallèlement à une ou plusieurs de ces étapes ou bien consécutivement à celles-ci, le dispositif d'éclairage 20 est commandé à l'émission par l'unité de commande 21 pour la réalisation de la fonction d'éclairage correspondante. Dans l'exemple des Figures, le dispositif d'éclairage 20 est par exemple commandé à l'émission en réponse à un freinage du véhicule.

Le dispositif selon l'invention présente plusieurs avantages.

Notamment, il permet la mise en oeuvre d'une signature lumineuse améliorée par la mise en mouvement de surfaces lumineuses, et ce tout en présentant une facture robuste, compacte et simple.

En outre, il s'appuie sur la transformation d'un mouvement de translation en mouvement de rotation pour l'obtention du mouvement des palettes.

Par ailleurs, les sources lumineuses contribuent en elles-mêmes à l'amélioration de l'apparence du dispositif 2 de par leur nature d'OLED.

Parallèlement, les éléments mobiles du dispositif et les dispositifs d'actionnement n'entravent pas la réalisation des autres fonctions du dispositif 2, telles que la fonction de feu arrière réglementaire lorsque le dispositif 2 est un feu arrière de véhicule automobile.

D'autres modes de réalisation sont envisageables.

En particulier, en variante, le dispositif d'actionnement 18 réalise le pivotement d'une palette 16 par l'intermédiaire d'un fil à mémoire de forme et d'un ressort. Le fil à mémoire de forme est associé à un sens de rotation de la palette, le ressort étant associé au sens de rotation inverse.

Ce fil et le ressort remplacent par exemple la bielle 36, le moteur 33 et le vérin de connexion 34. L'unité de commande 21 est alors configurée pour commander l'alimentation en énergie électrique du fil à mémoire de forme pour le faire s'élever en température et retrouver la forme mémorisée, et interrompre cette alimentation pour le faire baisser en température et autoriser sa déformation, de sorte que la palette puisse pivoter sous l'effet de la sollicitation exercée par le ressort.

## Revendications

1. Dispositif lumineux (2) pour véhicule automobile, le dispositif lumineux (2) étant adapté pour émettre de la lumière selon une direction d'émission principale (X) et comprenant au moins :
- une palette (16) montée mobile dans le dispositif lumineux (2), la palette (16) présentant un panneau (16P) sur lequel est agencée au moins une source surfacique de lumière (16S) ; dont la ou au moins une source surfacique de lumière (16S) est une diode électroluminescente organique couvrant tout ou partie de la surface du panneau (16P) de la palette correspondante (16), **caractérisé en ce que** la palette (16) étant montée mobile entre une position de repos et une position d'émission et **en ce que** la source surfacique de lumière (16S) de la ou chaque palette (16) étant visible dans la direction d'émission dans la position de repos.

2. Dispositif selon la revendication 1, **caractérisé en ce que** le dispositif comprend en outre au moins une embase (14) montée fixe dans le dispositif lumineux, la palette étant montée mobile sur l'embase, et **en ce que** le dispositif lumineux (2) comprend en outre un dispositif d'actionnement (18) adapté pour provoquer un déplacement de la palette (16) par rapport à l'embase entre une position de repos et une position d'émission.

3. Dispositif lumineux selon l'une quelconque des revendications précédentes, **caractérisé en ce que** la palette (16) est articulée sur l'embase (14), la source de lumière surfacique (16S) étant apte à émettre de la lumière selon une direction de rayonnement privilégiée (Y), et **en ce que** le dispositif d'actionnement (18) est adapté pour faire pivoter la palette (16) par rapport à l'embase entre ladite position de repos et ladite position d'émission dans laquelle la direction de rayonnement privilégiée (Y) de la source de lumière surfacique est voisine de la direction d'émission principale (X) ou correspond sensiblement à la direction d'émission principale (X) du dispositif lumineux.

4. Dispositif selon la revendication 3 **caractérisé en ce qu'**il comprend au moins deux palettes (16) présentant chacune un panneau (16P) sur lequel est agencée au moins une source de lumière surfaciques (16S), à chaque embase (14) étant associées deux palettes (16) montées mobiles sur ladite embase et agencées sur l'embase symétriquement l'une par rapport l'autre par rapport à la direction d'émission principale (X).

5. Dispositif selon la revendication l'une quelconque des revendications 3 à 4, **caractérisé en ce que** le dispositif d'actionnement (18) comprend un actionneur (30) et une pièce mobile (28) sur laquelle la ou chaque palette (16) associée à l'embase considérée est articulée, l'actionneur (30) étant adapté pour déplacer la pièce mobile (28) par rapport à l'embase de façon à faire pivoter simultanément chaque palette associée à l'embase considérée par rapport à ladite embase entre la position de repos et la position d'émission.

6. Dispositif selon la revendication 5, **caractérisé en ce que** chaque embase comprend au moins une gorge de guidage (14G) dans laquelle la pièce mobile du dispositif d'actionnement correspondant est déplaçable.

7. Dispositif selon l'une des revendications 5 à 6, **caractérisé en ce que** chaque palette (16) comprend un bras de connexion (16B) dont une première extrémité (16B1) est fixée au panneau correspondant, et dont une deuxième extrémité (16B2) est d'une part fixée à l'embase correspondante par l'intermédiaire d'un premier axe (A1), et d'autre part fixée à la pièce mobile (28) associée par l'intermédiaire d'un deuxième axe (A2).

8. Dispositif selon la revendication 7, dans lequel la deuxième extrémité (16B2) du bras de connexion comprend un orifice (26) pour la réception du deuxième axe (A2), ledit orifice (26) présentant une forme générale cylindrique de section oblongue.

9. Dispositif selon l'une quelconque des revendications 3 à 8, **caractérisé en ce qu'**il comprend au moins deux embases (14) fixes par rapport à un boîtier (4), et **en ce qu'**il comprend en outre un bâti (12) fixe par rapport au boîtier et sur lequel la ou chaque embase est agencée, les embases étant espacées les unes des autres le long du bâti (12).

10. Dispositif selon la revendication 9, **caractérisé en ce que** le dispositif (2) comprend en outre une unité de commande (21) adaptée pour provoquer le déplacement de chaque palette (16) selon une séquence d'actionnement au cours de laquelle les palettes (16) associées à des embases différentes sont déplacées entre leurs positions de repos et d'émission séquentiellement d'une embase à l'autre selon un sens de parcours donné du bâti (12).

11. Procédé d'utilisation d'un dispositif (2) selon l'une quelconque des revendications précédentes, le procédé comprenant :
- l'allumage d'au moins la source de lumière (16S), la source de lumière (16S) formant un film lumineux couvrant tout ou partie du panneau de la palette correspondante (16).

12. Procédé selon la revendication 11, le procédé étant mis en oeuvre au moyen d'un dispositif selon la revendication 1, le procédé comprenant en outre le déplacement de la ou d'au moins une palette (16) entre la position de repos et la position d'émission via le dispositif d'actionnement (18).

13. Procédé selon la revendication 12 mis en oeuvre au moyen d'un dispositif selon la revendication 9, le procédé comprenant :
- l'allumage de toutes les sources de lumières (16S) du dispositif lumineux,
- le déplacement de chaque palette entre la position de repos et la position d'émission, les palettes (16) associées à une embase (14) donnée étant pivotées simultanément, les palettes respectivement associées à des embases différentes (14) étant pivotées de manière décalée dans le temps selon un ordre prédéfini le long du bâti.

14. Procédé selon la revendication 12 mis en oeuvre au moyen d'un dispositif selon la revendication 10, dans lequel les palettes (16) associées à des embases différentes sont pivotées entre leurs positions de repos et d'émission séquentiellement d'une embase à l'autre selon un sens de parcours donné du bâti (12).

## Patentansprüche

1. Leuchtvorrichtung (2) für ein Kraftfahrzeug, wobei die Leuchtvorrichtung (2) angepasst ist, Licht gemäß einer Hauptemissionsrichtung (X) zu emittieren und wenigstens Folgendes umfasst:
- einen Flügel (16), der in der Leuchtvorrichtung (2) beweglich angebracht ist, wobei der Flügel (16) ein Panel (16P) aufweist, auf dem mindestens eine flächige Lichtquelle (16S) angeordnet ist;
dessen mindestens eine flächige Lichtquelle (16S) eine organische Leuchtdiode ist, die die gesamte oder einen Teil der Fläche des Panels (16P) des entsprechenden Flügels (16) abdeckt, **dadurch gekennzeichnet, dass** der Flügel (16) zwischen einer Ruheposition und einer Emissionsposition beweglich angebracht ist, und dadurch, dass die flächige Lichtquelle (16S) des oder jedes Flügels (16) in der Ruheposition in der Emissionsrichtung sichtbar ist.

2. Vorrichtung nach Anspruch 1, **dadurch gekennzeichnet, dass** die Vorrichtung ferner mindestens einen Sockel (14) umfasst, der fest in der Leuchtvorrichtung angebracht ist, wobei der Flügel auf dem Sockel beweglich angebracht ist, und dadurch, dass die Leuchtvorrichtung (2) ferner eine Betätigungsvorrichtung (18) umfasst, die angepasst ist, eine Bewegung des Flügels (16) bezogen auf den Sockel zwischen einer Ruheposition und einer Emissionsposition zu bewirken.

3. Leuchtvorrichtung nach einem der vorhergehenden Ansprüche, **dadurch gekennzeichnet, dass** der Flügel (16) an den Sockel (14) angelenkt ist, wobei die flächige Lichtquelle (16S) geeignet ist, Licht gemäß einer privilegierten Strahlungsrichtung (Y) zu emittieren, und dadurch, dass die Betätigungsvorrichtung (18) angepasst ist, den Flügel (16) bezogen auf den Sockel zwischen der Ruheposition und der Emissionsposition zu schwenken, wobei die privilegierte Strahlungsrichtung (Y) der flächigen Lichtquelle der Hauptemissionsrichtung (X) benachbart ist oder der Hauptemissionsrichtung (X) der Leuchtvorrichtung im Wesentlichen entspricht.

4. Vorrichtung nach Anspruch 3, **dadurch gekennzeichnet, dass** sie mindestens zwei Flügel (16) umfasst, die jeweils ein Panel (16P) aufweisen, auf dem mindestens eine flächige Lichtquelle (16S) angeordnet ist, wobei mit jedem Sockel (14) zwei Flügel (16) in Verbindung stehen, die beweglich an dem Sockel angebracht sind und auf dem Sockel symmetrisch zueinander bezogen auf die Hauptemissionsrichtung (X) angeordnet sind.

5. Vorrichtung nach Anspruch einem der Ansprüche 3 bis 4, **dadurch gekennzeichnet, dass** die Betätigungsvorrichtung (18) ein Betätigungselement (30) und ein bewegliches Teil (28) umfasst, auf dem der oder jeder Flügel (16), der mit dem betreffenden Sockel in Verbindung steht, angelenkt ist, wobei das Betätigungselement (30) angepasst ist, das bewegliche Teil (28) bezogen auf den Sockel zu bewegen, um jeden Flügel, der mit dem betreffenden Sockel in Verbindung steht, gleichzeitig bezogen auf den Sockel zwischen der Ruheposition und der Emissionsposition zu schwenken.

6. Vorrichtung nach Anspruch 5, **dadurch gekennzeichnet, dass** jeder Sockel mindestens eine Führungsnut (14G) umfasst, in der das bewegliche Teil der entsprechenden Betätigungsvorrichtung bewegbar ist.

7. Vorrichtung nach einem der Ansprüche 5 bis 6, **dadurch gekennzeichnet, dass** jeder Flügel (16) einen Verbindungsarm (16B) umfasst, von dem ein erstes Ende (16B1) an dem entsprechenden Panel befestigt ist, und von dem ein zweites Ende (16B2) einerseits mittels einer ersten Achse (A1) an dem entsprechenden Sockel befestigt ist und andererseits mittels einer zweiten Achse (A2) an dem zugehörigen beweglichen Teil (28) befestigt ist.

8. Vorrichtung nach Anspruch 7, wobei das zweite Ende (16B2) des Verbindungsarms eine Öffnung (26) zur Aufnahme der zweiten Achse (A2) umfasst, wobei die Öffnung (26) eine längliche, im Allgemeinen zylindrische Querschnittsform aufweist.

9. Vorrichtung nach einem der Ansprüche 3 bis 8, **dadurch gekennzeichnet, dass** sie mindestens zwei Sockel (14) umfasst, die bezogen auf ein Gehäuse (4) fest sind, und dadurch, dass sie ferner ein Gestell (12) umfasst, das bezogen auf das Gehäuse fest ist, und auf dem der oder jeder Sockel angeordnet ist, wobei die Sockel entlang dem Gestell (12) voneinander beabstandet sind.

10. Vorrichtung nach Anspruch 9, **dadurch gekennzeichnet, dass** die Vorrichtung (2) ferner eine Steuerungseinheit (21) umfasst, die angepasst ist, die Bewegung jedes Flügels (16) entsprechend einer Betätigungssequenz zu bewirken, während welcher die Flügel (16), die mit verschiedenen Sockeln in Verbindung stehen, in einer bestimmten Streckenrichtung des Gestells (12) sequentiell von einem Sockel zum anderen zwischen ihren Ruhepositionen und Emissionspositionen bewegt werden.

11. Verfahren zur Nutzung einer Vorrichtung (2) nach einem der vorhergehenden Ansprüche, das Verfahren umfassend:
- das Einschalten zumindest der Lichtquelle (16S), wobei die Lichtquelle (16S) einen Leuchtfilm bildet, der das gesamte oder einen Teil des Panels des entsprechenden Flügels (16) abdeckt.

12. Verfahren nach Anspruch 11, wobei das Verfahren mittels einer Vorrichtung nach Anspruch 1 umgesetzt wird, das Verfahren ferner umfassend die Bewegung des oder mindestens eines Flügels (16) zwischen der Ruheposition und der Emissionsposition über die Betätigungsvorrichtung (18).

13. Verfahren nach Anspruch 12, das mittels einer Vorrichtung nach Anspruch 9 umgesetzt wird, das Verfahren umfassend:
- das Einschalten aller Lichtquellen (16S) der Leuchtvorrichtung,
- die Bewegung jedes Flügels zwischen der Ruheposition und der Emissionsposition, wobei die Flügel (16), die mit einem bestimmten Sockel (14) in Verbindung stehen, gleichzeitig geschwenkt werden, wobei die Flügel, die jeweils mit unterschiedlichen Sockeln (14) in Verbindung stehen, zeitversetzt entsprechend einer vorbestimmten Reihenfolge entlang dem Gestell geschwenkt werden.

14. Verfahren nach Anspruch 12, das mittels einer Vorrichtung nach Anspruch 10 durchgeführt wird, wobei die Flügel (16), die mit unterschiedlichen Sockeln in Verbindung stehen, in einer bestimmten Streckenrichtung des Gestells (12) sequentiell von einem Sockel zum anderen zwischen ihren Ruhepositionen und Emissionspositionen geschwenkt werden.

## Claims

1. Lighting device (2) for motor vehicle, the lighting device (2) being designed to emit light in a main direction of emission (X) and comprising at least:
- a vane (16) mounted with the ability to move in the lighting device (2), the vane (16) having a panel (16P) on which at least one area light source (16S) is arranged:
the or at least one area light source (16S) of which is an organic light emitting diode covering all or part of the surface of the panel (16P) of the corresponding vane, **characterized in that** the vane (16) is mounted with the ability to move between a rest position and an emission position and **in that** the area light source (16S) of the or each vane (16) is visible in the direction of emission in the rest position.

2. Device according to Claim 1, **characterized in that** the device further comprises at least one mount (14) fixedly mounted in the lighting device, the vane being mounted with the ability to move on the mount, and **in that** the lighting device (2) further comprises an actuating device (18) configured to cause the vane (16) to move with respect to the mount between a rest position and an emission position.

3. Lighting device according to either one of the preceding claims, **characterized in that** the vane (16) is articulated to the mount (14), the area light source (16S) being suited to emitting light in a favored direction of radiation (Y), and **in that** the actuating device (18) is suited to causing the vane (16) to pivot with respect to the mount between said rest position and said emission position in which the favored direction of radiation (Y) of the area light source is close to the main direction of emission (X) or corresponds more or less to the main direction of emission (X) of the lighting device.

4. Device according to Claim 3, **characterized in that** it comprises at least two vanes (16) each having a panel (16P) on which is arranged at least one area light source (16S), there being associated with each mount (14) two vanes (16) which are mounted with the ability to move on said mount and arranged on the mount symmetrically with respect to one another about the main direction of emission (X).

5. Device according to either one of Claims 3 and 4, **characterized in that** the actuating device (18) comprises an actuator (30) and a moving part (28) to which the or each vane (16) associated with the relevant mount is articulated, the actuator (30) being suited to moving the moving part (28) with respect to the mount in such a way as to cause each vane associated with the relevant mount to pivot simultaneously with respect to said mount between the rest position and the emission position.

6. Device according to Claim 5, **characterized in that** each mount comprises at least one guide groove (14G) in which the moving part of the corresponding actuating device can move.

7. Device according to either of Claims 5 and 6, **characterized in that** each vane (16) comprises a connecting arm (16B) of which a first end (16B1) is fixed to the relevant panel, and of which a second end (16B2) is, on the one hand, fixed to the relevant mount via a first axis (A1) and, on the other hand, fixed to the associated moving part (28) via a second axis (A2).

8. Device according to Claim 7, in which the second end (16B2) of the connecting arm comprises an orifice (26) to accept the second axis (A2), said orifice (26) having a cylindrical overall shape of oblong cross section.

9. Device according to any one of Claims 3 to 8, **characterized in that** it comprises at least two mounts (14) which are fixed with respect to a housing (4) and **in that** it further comprises a framework (12) that is fixed relative to the housing and on which the or each mount is arranged, the mounts being spaced apart along the framework (12).

10. Device according to Claim 9, **characterized in that** the device (2) further comprises a control unit (21) suited to causing each vane (16) to move according to an actuation sequence during the course of which the vanes (16) associated with different mounts are moved between their rest and emission positions sequentially from one mount to another in a given direction of travel over the framework (12).

11. Method for using a device (2) according to any one of the preceding claims, the method involving:
- switching on at least the light source (16S), the light source (16S) forming a film of light covering all or part of the panel of the relevant vane (16).

12. Method according to Claim 11, the method being implemented by means of a device according to Claim 1, the method further involving moving the or at least one vane (16) between the rest position and the emission position by means of the actuating device (18).

13. Method according to Claim 12 implemented by means of a device according to Claim 9, the method involving:
- switching on all of the light sources (16S) of the lighting device,
- moving each vane between the rest position and the emission position, the vanes (16) associated with a given mount (14) being pivoted simultaneously, the vanes respectively associated with different mounts (14) being pivoted with a temporal offset in a predefined order along the framework.

14. Method according to Claim 12 implemented by means of a device according to Claim 10, in which the vanes (16) associated with different mounts are pivoted between their rest and emission positions sequentially from one mount to another in a given direction of travel over the framework (12).
